(19) Europäisches Patentamt
European Patent Office
Office européen des brevets

(11) **EP 3 502 676 B1**

(12) **FASCICULE DE BREVET EUROPEEN**

(45) Date de publication et mention de la délivrance du brevet:
**25.05.2022 Bulletin 2022/21**

(21) Numéro de dépôt: **18214861.9**

(22) Date de dépôt: **20.12.2018**

(51) Classification Internationale des Brevets (IPC):
***G01N 23/20*** *(2018.01)*

(52) Classification Coopérative des Brevets (CPC):
**G01N 23/207; G01N 25/16;** G01N 2223/61

(54) **MÉTHODE DE DÉTERMINATION DU COEFFICIENT DE DILATATION THERMIQUE D'UN FILM MINCE CRISTALLIN PAR DIFFRACTION**

METHODE ZUR BESTIMMUNG DES WÄRMEAUSDEHNUNGSKOEFFIZIENTEN EINER KRISTALLINEN DÜNNSCHICHT DURCH BEUGUNG

METHOD FOR DETERMINING THE THERMAL EXPANSION COEFFICIENT OF A THIN CRYSTALLINE FILM BY DIFFRACTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2017 FR 1763168**

(43) Date de publication de la demande:
**26.06.2019 Bulletin 2019/26**

(73) Titulaire: **Commissariat à l'énergie atomique et aux énergies alternatives 75015 Paris (FR)**

(72) Inventeur: **GERGAUD, Patrice 38500 LA BUISSE (FR)**

(74) Mandataire: **Brevalex 95, rue d'Amsterdam 75378 Paris Cedex 8 (FR)**

(56) Documents cités:
- **Baker: "Thermomechanical Behavior of different texture components in Cu thin films", , 1 janvier 2001 (2001-01-01), pages 2145-2160, XP055508053, Extrait de l'Internet: URL:https://www.sciencedirect.com/science/ article/pii/S1359645401001276/pdfft?md5=13 77add9718373d2bd8f67150228b54f&pid=1-s2.0- S1359645401001276-main.pdf [extrait le 2018-09-19]**
- **NIKOLAOS BAIMPAS ET AL: "Stress evaluation in thin films: Micro-focus synchrotron X-ray diffraction combined with focused ion beam patterning for do evaluation", THIN SOLID FILMS, vol. 549, 1 décembre 2013 (2013-12-01), pages 245-250, XP055507216, AMSTERDAM, NL ISSN: 0040-6090, DOI: 10.1016/j.tsf.2013.07.019**
- **JOZEF KECKES: "Simultaneous determination of experimental elastic and thermal strains in thin films", JOURNAL OF APPLIED CRYSTALLOGRAPHY., vol. 38, no. 2, 11 mars 2005 (2005-03-11), pages 311-318, XP055507988, DK ISSN: 0021-8898, DOI: 10.1107/S0021889805001044**
- **ZOO Y ET AL: "Investigation of coefficient of thermal expansion of silver thin film on different substrates using X-ray diffraction", THIN SOLID FILMS, ELSEVIER, AMSTERDAM, NL, vol. 513, no. 1-2, 14 August 2006 (2006-08-14), pages 170-174, XP025005835, ISSN: 0040-6090, DOI: 10.1016/J.TSF.2006.02.005 [retrieved on 2006-08-14]**

1       EP 3 502 676 B1       2

## Description

## DOMAINE TECHNIQUE ET ÉTAT DE LA TECHNIQUE ANTÉRIEURE

La présente invention se rapporte à une méthode de détermination d'au moins une caractéristique mécanique d'un film mince cristallin déposé sur un substrat, par exemple de détermination du coefficient de dilatation thermique du matériau du film mince ou de la contrainte résiduelle interne du film mince.

On cherche à déterminer les contraintes résiduelles internes à un film mince en matériau cristallin déposé sur un substrat, par exemple pour connaître leur impact sur les structures multicouches. On cherche par ailleurs à déterminer les coefficients de dilatation thermique d'un film mince en matériau cristallin déposé sur un substrat.

Une méthode de mise en œuvre pour déterminer les contraintes internes à un film cristallin mince déposé sur un substrat ou son coefficient de dilatation thermique ou TEC (Thermal Expansion Coefficient en terminologie anglo-saxonne) consiste à mesurer son paramètre de maille à différentes températures (mesures in situ). Cette méthode est par exemple décrite dans les documents Y. Kuru, M. Wohlschlögel, U. Welzel and E. J. Mittemeijer, J. Appl. Cryst. (2008). 41, 428-435 et S.P. Baker, A. Kretschmann, E. Arzt, Acta Mater., 49 (2001), p. 2145.

Cette méthode implique de mesurer un paramètre de maille dans plusieurs directions de l'espace et nécessite également une connaissance des propriétés élastiques du film. En effet, la différence de coefficient de dilatation entre le film et le substrat provoque une mise en contrainte du film lorsque l'on fait varier la température. La variation de paramètre de maille mesurée due à la variation de température est alors due, d'une part, à la dilatation naturelle du film lié à son coefficient de dilatation thermique et, d'autre part, à la contrainte induite par la différence des coefficients thermiques de dilatation entre le film et le substrat. Il est alors nécessaire de séparer ces deux effets. La séparation de ces effets peut être réalisée en considérant que la variation de paramètre de maille due au coefficient de dilatation thermique est isotrope dans l'espace, alors que la contrainte mécanique a un effet anisotrope, c'est-à-dire que la variation de paramètre de maille est différente dans le plan du film et selon la normale au film. Ainsi en mesurant la variation du paramètre de maille du film dans différentes directions de l'espace, par exemple en faisant pivoter l'échantillon, on peut séparer l'effet due à une déformation isotrope et donc au coefficient de dilatation thermique et l'effet d'une déformation anisotrope due à déformation résultant des différences de coefficients de dilatation thermique entre le film mince et le substrat.

Cette méthode de détermination requiert donc pour plusieurs températures, des mesures dans différentes directions de l'espace. Cette méthode est complexe et relativement longue. En outre elle implique de connaître les coefficients élastiques du film et du substrat. Une méthode de détermination du coefficient de dilatation thermique d'un film mince en matériau cristallin déposé sur un substrat est connue de JOZEF KECKES: "Simultaneous determination of experimental elastic and thermal strains in thin films",JOURNAL OF APPLIED CRYSTALLOGRAPHY., vol. 38, no. 2, 11 mars 2005 (2005-03-11), pages 311-318, ISSN: 0021-8898. Une autre méthode est connue de ZOO YETAL: "Investigation of coefficient of thermal expansion of silver thin film on différent substrates using X-ray diffraction",THIN SOLID FILMS, ELSEVIER, AMSTERDAM, NL, vol. 513, no. 1-2, 14 août 2006 (2006-08-14), pages 170-174, ISSN: 0040-6090. Z

## EXPOSÉ DE L'INVENTION

C'est par conséquent un but de la présente invention d'offrir une méthode de détermination d'au moins une caractéristique physique ou mécanique d'un film mince cristallin déposé sur un substrat plus simple que les méthodes de l'état de la technique.

Le but énoncé ci-dessus est atteint par une méthode de détermination d'au moins une caractéristique physique ou mécanique d'un film mince cristallin déposé sur un substrat, comportant la structuration d'une zone du film mince afin de provoquer une relaxation au moins partielle des contraintes dans cette zone, de mesure d'un paramètre de maille au moins dans cette zone à plusieurs températures, et de détermination d'au moins une caractéristique mécanique à partir de ces mesures de paramètres de maille.

L'inventeur a pensé à résoudre le problème de l'effet de la différence de coefficients de dilatation thermique en supprimant cet effet, de sorte que cet effet n'intervienne pas dans les mesures de paramètres de maille, au lieu de l'isoler dans les mesures faites comme c'est le cas dans les méthodes de l'état de la technique.

Grâce à l'invention, il est alors possible de déterminer directement le coefficient de dilatation thermique à partir de la variation du paramètre de maille par un calcul très simple en comparaison des méthodes de l'état de la technique.

De manière avantageuse, la méthode selon l'invention permet de déterminer également les contraintes internes à la couche, résultant par exemple de la différence de paramètres de maille entre le substrat et le film mince et/ou des conditions de dépôt. Pour cela, la méthode prévoit de mesurer également les paramètres de maille dans une portion du film n'ayant pas subi de relaxation de contrainte. En comparant le paramètre de maille mesuré dans la zone relaxée et dans la zone non relaxée, on peut obtenir la contrainte interne dans le film mince. Il n'est plus nécessaire d'effectuer des mesures dans plusieurs directions de l'espace. La durée de mise en œuvre de cette méthode est alors plus courte que celle pour les méthodes de l'état de la technique.

2

La présente invention a alors pour objet une méthode de détermination d'au moins une caractéristique physique ou mécanique d'un film mince en matériau cristallin déposé sur un substrat, telle que décrite dans la revendication 1, comportant :

> a) la structuration d'une partie au moins du film mince cristallin de sorte à former un réseau de plots dont la hauteur est au moins égale à l'épaisseur du film mince,
> b) la mesure du paramètre de maille du matériau du film mince par diffraction dans le réseau de plots à plusieurs températures données,
> c) détermination de a au moins une caractéristique physique ou mécanique à partir des paramètres de mailles mesurés aux différentes températures.

Dans un exemple, lors de l'étape c) la caractéristique physique déterminée peut être le coefficient de dilatation thermique du matériau du film mince. De préférence, lors de l'étape c), un détecteur d'angle est mis en œuvre pour détecter les faisceaux diffractés et dans laquelle le détecteur scanne angulairement pas à pas.

Dans un autre exemple, lors de l'étape c) la caractéristique mécanique déterminée est la contrainte interne dans le film mince. Alors, lors de l'étape a) une zone sans structuration, dite « zone pleine plaque » est conservée et ladite méthode comportant également la mesure du paramètre de maille du film en dehors du réseau par diffraction auxdites plusieurs températures données. De préférence, la distance entre la zone pleine plaque et la zone structurée est suffisante pour que les contraintes dans la zone pleine plaque ne soient pas relaxées. De manière préférée, lors de l'étape c) un détecteur de position est mis en œuvre.

Lors de l'étape a) le réseau est par exemple réalisé par faisceau d'ions plasma focalisés ou par photolithographie et gravure.

Avantageusement, les plots ont une profondeur supérieure à l'épaisseur du film mince de sorte que les plots comportent une partie du matériau du substrat.

De manière également avantageuse, lors de l'étape a) les plots formés comportent des flancs inclinés.

De préférence, la surface du réseau de plots est au moins égale à l'empreinte du faisceau de diffraction sur le film mince.

Lors de l'étape b), la ou les mesures du paramètre de maille est réalisé de préférence par diffraction de rayons X ou de neutrons.

La présente invention également pour objet un échantillon, en vue d'un analyse par diffraction, comportant un substrat et un film mince muni d'un réseau de plots dont la hauteur est au moins égale à l'épaisseur du film mince, les plots étant dimensionner afin de provoquer une relaxation au moins partielle des contraintes dans cette zone du film mince.

## BRÈVE DESCRIPTION DES DESSINS

La présente invention sera mieux comprise sur la base de la description qui va suivre et des dessins en annexe sur lesquels:

- la figure 1 est une représentation schématique d'un échantillon auquel s'applique la méthode de détermination selon l'invention,
- la figure 2A est une représentation schématique d'une vue de côté d'un exemple d'échantillon préparée dans le cadre de la méthode selon l'invention à la température T,
- la figure 2B est une représentation schématique d'une vue de dessus de l'échantillon de la figure 2A,
- la figure 2C est une vue de côté de l'échantillon de la figure 2A à une température T + $\Delta$T,
- la figure 3A est une représentation schématique d'une vue de côté d'un autre exemple d'échantillon préparée dans le cadre de la méthode selon l'invention,
- la figure 3B est une représentation schématique d'une vue de côté d'un autre exemple d'échantillon préparée dans le cadre de la méthode selon l'invention,
- la figure 4A est une représentation graphique de la variation de la contrainte résiduelle dans le film mince en fonction de la dimension des plots de la zone structurée, pour un empilement substrat - film mince de k de l'ordre de 1,
- la figure 4B est une représentation graphique de la variation de la contrainte résiduelle dans le film mince en fonction de la dimension des plots de la zone structurée, pour un empilement substrat - film mince de k = 0,38,
- la figure 5A est une représentation graphique de la variation du paramètre de maille en fonction de la direction du faisceau incident à deux températures différentes dans une zone structurée d'un film mince de l'échantillon selon la présente invention,
- la figure 5B est une représentation graphique de la variation du paramètre de maille en fonction de la direction du faisceau incident à deux températures différentes dans un film mince d'un échantillon selon la présente invention,
- la figure 6 est une représentation schématique d'une vue de côté d'un autre exemple d'échantillon préparée dans le cadre de la méthode selon l'invention permettant la détermination de la contrainte interne du film mince.

## EXPOSÉ DÉTAILLÉ DE MODES DE RÉALISATION PARTICULIERS

Dans la présente demande, on entend par « cristallin », un matériau monocristallin ou polycristallin. En outre, les expressions «contrainte résiduelle » et « contrainte interne » sont utilisées pour désigner les contraintes dans le film mince due à la différence de paramètres de maille entre le film mince et le substrat et/ou les conditions de dépôt et la différence de coefficients de dilatation thermique.

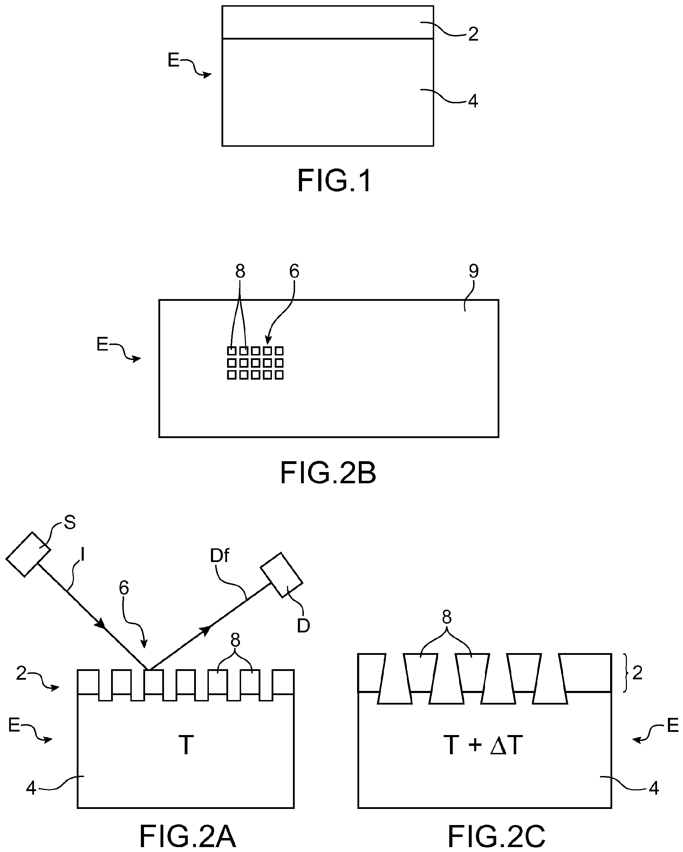

Sur la figure 1, on peut voir une représentation schématique d'un échantillon E comportant un film mince cristallin 2 dont on veut déterminer une ou des caractéristiques mécaniques. L'échantillon E comporte également un substrat 4 sur une face duquel le film mince 2 a été formé.

Le film mince a une épaisseur par exemple comprise entre d'au moins 10 nm et 30 μm.

Le film a une épaisseur inférieure à environ 5% de celle du substrat.

Le substrat a par exemple une épaisseur comprise d'au moins quelques dizaines de microns.

Le film mince est par exemple un matériau mis en œuvre dans la microélectronique, par exemple en matériau métallique, céramique ou semi-conducteur, tel que le silicium, les IV-IV, les III-V, les III-N, les II-VI, un métal tel que le cuivre, le nitrure de titane, le tungstène

Le substrat peut être en matériau cristallin ou amorphe. Le substrat est par exemple un substrat de silicium ou de saphir, du verre, un métal, une céramique...

Le film mince est formé sur le substrat, par exemple par dépôt physique en phase vapeur, par dépôt chimique en phase vapeur, par dépôt de couches atomique ou ALD (Atomic Layer Deposition en terminologie anglo-saxonne).

La méthode de détermination d'au moins une caractéristique mécanique du film mince cristallin selon l'invention comporte :

> a) la réalisation d'au moins une zone dans le film mince dans laquelle les contraintes sont au moins en partie relaxées,
> b) la mesure du paramètre de maille du film mince au moins dans ladite zone par diffraction,
> c) détermination de ladite au moins une caractéristique mécanique du film mince.

Lors de la formation du film mince sur le substrat des contraintes sont générées dans le film mince, par exemple dues à la différence de paramètre de maille entre le matériau du film mince et celui du substrat et/ou aux conditions de formation du film mince, par exemple les conditions de dépôt.

Lors de l'étape a), une zone 6 du film mince est structurée pour provoquer une relaxation des contraintes internes du film dans cette zone. Lors de cette étape, un réseau de plots 8 est formé dans le film. Sur la figure 2A, on peut voir un exemple de structuration vue de côté, les plots 8 à température ambiante sont parallélépipédiques. Sur la figure 2B, on peut voir une vue de dessus de l'échantillon comportant la zone 6 de la figure 2A. Dans l'exemple représenté, la zone structurée est entourée d'une zone non structurée 9 dite « zone pleine plaque ».

Dans cet exemple, la zone est de forme carrée de côté de dimension c, par exemple égale à quelques dizaines de μm.

La hauteur des plots 8 est au moins égale à l'épaisseur du film mince 2. Les dimensions des plots dans le plan dépendent du niveau de relaxation souhaitée comme cela sera expliqué ci-dessous.

Dans l'exemple représenté, la zone structurée est de forme carrée mais une forme ronde ou autre peut convenir.

La surface de la zone structurée est choisie suffisamment grande pour que, lors de l'étape b) de mesure par diffraction, le faisceau incident puisse illuminer uniquement la zone structurée. La surface de la zone structurée est choisie de préférence plus grande que l'empreinte du faisceau sur la surface de l'échantillon, par exemple l'empreinte du faisceau peut être comprise entre plusieurs μm$^2$ et plusieurs mm$^2$. Par exemple pour un faisceau de 50 μm de diamètre, on peut choisir une zone structurée de forme carrée de 50 μm de côté au moins.

La zone structurée est adjacente à une zone de film mince non structurée, dite pleine plaque, i.e. présentant les contraintes non relaxées.

Comme nous le verrons par la suite, il peut être intéressant de réaliser une mesure du paramètre de maille de la zone structurée et une mesure du paramètre de maille de la zone pleine plaque. La zone structurée est alors située par rapport à une zone pleine plaque, de sorte que la zone pleine plaque illuminée par le faisceau soit suffisamment loin du bord de la zone structurée, pour que la zone pleine plaque ne soit pas sensible à la relaxation de la zone structurée. De manière avantageuse, l'échantillon comporte une zone pleine plaque située à une distance égale à environ au moins deux fois le diamètre du faisceau. Par exemple, la distance entre le bord de la zone structurée et celui de la zone pleine plaque est comprise entre quelques centaines de μm et 1 mm.

De manière avantageuse, les plots sont formés également dans une partie de l'épaisseur du substrat, ce qui permet une relaxation des contraintes plus efficace.

Sur la figure 2C, on peut voir les plots de la figure 2A à une température T + ΔT, les plots ont subi une dilatation thermique. Cette déformation par dilatation est favorisée par le fait que les contraintes dans les plots ont été en grande partie relaxées.

Dans la présente demande, on considère que la contrainte résiduelle d'une zone ou d'un plot est relaxée lorsqu'elle est négligeable par rapport aux effets du coefficient de dilatation thermique à déterminer. Le niveau de relaxation choisi dépend de la précision sur la valeur de la caractéristique souhaitée.

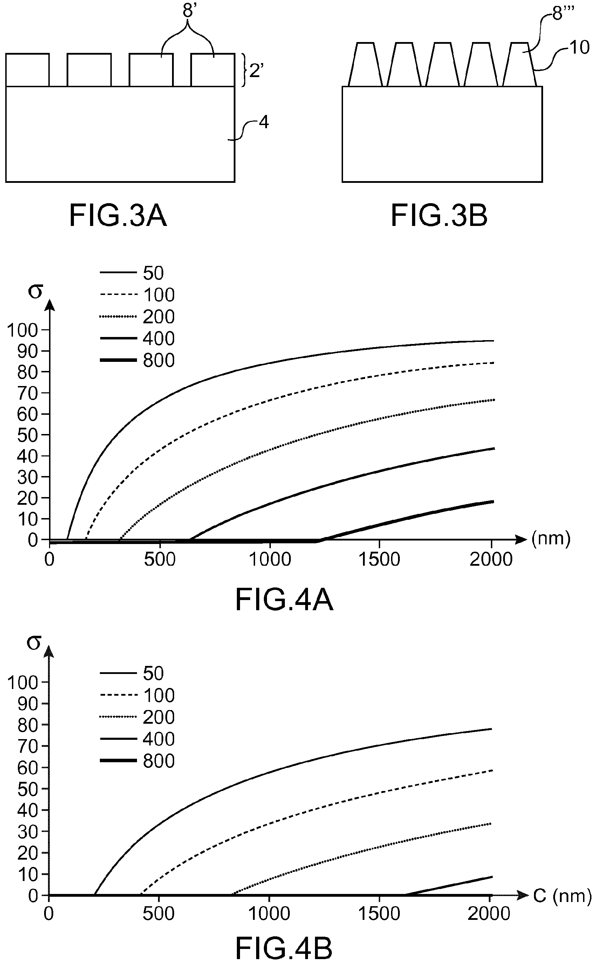

Dans un autre exemple de réalisation, la zone structurée 6' comporte des plots 8' formés uniquement dans toute la hauteur de la couche mince (figure 3).

Le réseau de plots est par exemple obtenu par photolithographie et gravure par faisceau électronique (e-beam en terminologie anglo-saxonne), ou de type faisceau d'ions plasma focalisés ou Plasma-FIB (Plasma Focus Ion Beam en terminologie anglo-saxonne). La distance entre les plots dépend du procédé mis en œuvre pour réaliser la zone structurée.

De manière avantageuse, les flans 10 des plots 8''' sont inclinés de sorte que leur section soit trapézoïdale, comme cela est représenté sur la figure 3B, voire triangulaire. Ces formes favorisent la relaxation des contraintes i.e. pour la même largeur moyenne des plots, on obtient une plus forte relaxation. En conséquence, pour une même relaxation, les formes triangulaires ou trapézoïdales peuvent être plus larges, et donc nécessiter un moins grand nombre de lignes de gravure. En effet comme cela sera expliqué ci-dessous plus les plots sont de petites dimensions plus le niveau de relaxation est élevé. Les plots peuvent avoir une section ronde dans le plan de l'échantillon, le plot peut être de forme cylindrique ou conique ou tronconique.

Le niveau de relaxation est contrôlé en choisissant la forme des plots, leur hauteur, leurs dimensions dans le plan du film (désignées b sur la figure 2B). Le niveau de relaxation dépend également du rapport des rigidités du film et du substrat, i.e. dépendant de son module élastique et de son coefficient de Poisson selon la relation :

$$k = \frac{M_s}{M_f} = \frac{E_s(1 - v_f^2)}{(1 - v_s^2)E_f},$$

Avec Ms la rigidité du substrat, Mf la rigidité du film, Es le module d'Young du substrat, Es le module d'Young du film, vs le coefficient de Poisson du substrat et vf le coefficient de Poisson du film.

La figure 4A est une représentation graphique de la variation de la contrainte σ dans les plots de section carrée de côté a en fonction de la valeur de a en nm, pour plusieurs épaisseurs de film mince. Ces variations correspondent à des plots formés uniquement dans la couche mince (échantillon de la figure 3A), i.e. la hauteur des plots est égale à l'épaisseur du film mince. Ces courbes correspondant à un empilement substrat -film mince de coefficient k égal à 1 ou environ égal à 1, ce qui correspond à un film en silicium sur un substrat silicium ou un film Si-Ge sur un substrat Si.

La contrainte est donnée en pourcentage de la contrainte nominale, i.e. la contrainte résiduelle du film pleine plaque. On constate que plus l'épaisseur du film est faible, plus les plots ont des faibles dimensions pour relaxer les contraintes.

La figure 4B est une représentation graphique de la variation de la contrainte σ dans les plots de section carrée de côté a en fonction de la valeur de a en nm, pour plusieurs épaisseurs de film mince. Ces variations correspondent à des plots formés uniquement dans la couche mince (échantillon de la figure 3A), i.e. la hauteur des plots est égale à l'épaisseur du film mince. Ces courbes correspondant à un empilement substrat -film mince de k = 0,38, ce qui correspond à un film de tungstène sur un substrat silicium.

En choisissant de manière adéquate les dimensions des plots, la variation de température n'entraine plus une mise en contrainte du film qui est relaxée par les effets de bord, ou entraine une mise en contrainte négligeable par rapport à l'effet du coefficient de dilatation thermique du film mince. La variation du paramètre de maille dans la zone gravée n'est due qu'au coefficient de dilatation thermique.

L'homme du métier sait comment déterminer les dimensions du réseau de plots de la zone structurée de sorte qu'il assure une relaxation suffisante des contraintes, une telle méthode est par exemple décrite dans le document N. Baimpas et al. « Stress evaluation in thin films : Micro-focus synchrotron X-ray diffraction combined with focused ion beam patterning for do évaluation"/ Thin Solid Films 549 (2013) 245-250.

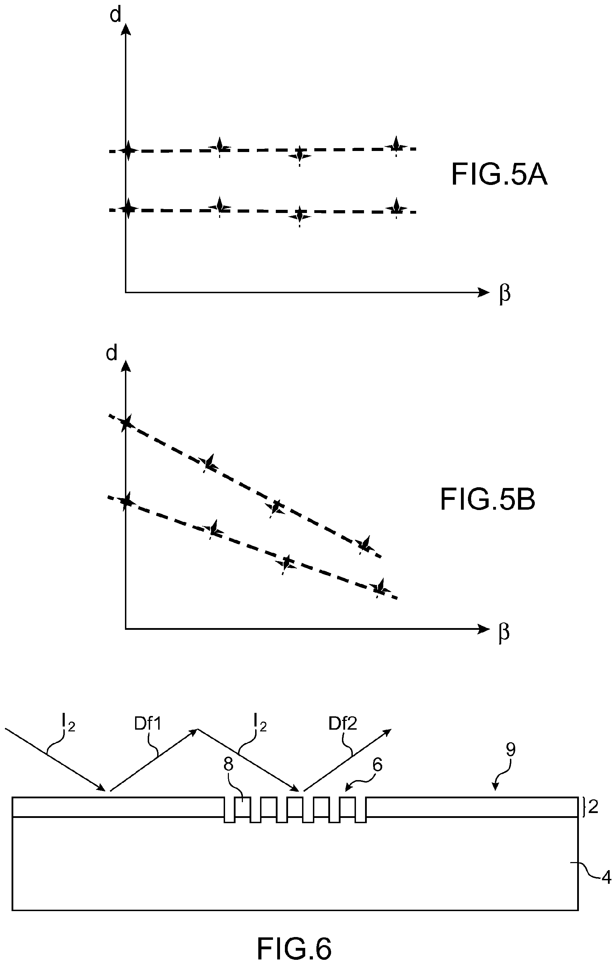

Sur la figure 5A, on peut voir la variation du paramètre de maille dans la zone structurée en fonction de l'angle β du faisceau de rayons X incident, pour deux températures différentes T1 et T2. On constate que celui-ci ne varie plus en fonction de l'angle d'incidence, ce qui implique que seul le coefficient de dilatation thermique dont l'effet est isotrope agit sur le paramètre de maille. Sur la figure 5B, on peut voir la variation du paramètre de maille d'une zone pleine plaque (non relaxée) en fonction de l'angle β du faisceau de rayons X incident, pour deux températures différentes (T1 et T2). On constate que le paramètre de maille varie en fonction de l'angle d'incidence, i.e. que le paramètre de maille est influencé par les différences de coefficients de dilatation thermique entre le film mince et le substrat.

Il en résulte que la mesure du paramètre de maille peut être réalisée dans une seule direction de l'espace, avantageusement la normale à l'échantillon comme cela est représenté sur la figure 2A. Le faisceau incident est désigné I et le faisceau réfléchi est Df.

Lors de l'étape b), on réalise une mesure du paramètre de maille par diffraction à plusieurs températures. Il peut s'agir d'une diffraction de rayons X ou une diffraction de neutrons. Dans la suite de la description, nous considérerons la diffraction de rayons X. On utilise un diffractomètre à rayons X bien connu de l'homme du métier. Il comporte une source S émettant un faisceau incident I de rayons X et au moins un détecteur D du faisceau diffracté Df (figure 2A).

On dispose par exemple l'échantillon sur ou dans des moyens de contrôle en température. Il peut s'agir d'un four ou d'un cryostat. En effet, les mesures peuvent être faites à basse température, par exemple à la température de l'azote liquide ou de l'hélium liquide.

De manière préférence, la direction de mesure est normale au plan de l'échantillon, l'angle d'incidence du faisceau par rapport à la surface est alors égal à l'angle de diffraction par rapport à la surface.

La mesure est faite pour un plan cristallin hkl. La distance interréticulaire mesurée pour ce plan est une combinaison des paramètres de maille de la structure cristalline. Le coefficient de dilatation thermique mesuré pour ce plan est donc une combinaison des coefficients de dilatation thermique de ces différents paramètres de maille. Si on souhaite extraire le coefficient de dilatation thermique de chaque paramètre, on mesure de 1 à 6 plans hkl indépendants en fonction de la symétrie cristalline. Pour un cristal cubique une seule mesure suffit, pour un cristal tétragonal (a,b,c), 3 plans sont nécessaires, etc...

On réalise ces mesures à différentes températures. De préférence, on réalise suffisamment de mesures pour pouvoir réaliser une régression linéaire, notamment si on suppose que le coefficient de dilatation thermique dépend de la température. Si le coefficient de dilatation thermique ne dépend pas de la température, deux mesures peuvent suffire, l'une par exemple à température ambiante et l'autre à une température qui peut être la température minimale ou maximale considérée. La valeur du paramètre de maille d varie en fonction de la température du fait du coefficient de dilatation thermique uniquement ou au moins principalement.

On peut alors écrire $\Delta d/d = \alpha(T).\Delta T$, (Equation 1), avec $\alpha$ un coefficient de proportionnalité.

Dans tous les cas, on constate que grâce à la méthode selon l'invention la détermination du coefficient de dilatation thermique est rapide et très simple et met en œuvre très peu de calculs en comparaison des méthodes de l'état de la technique. De plus elle ne requiert pas de mesure dans les différentes directions. Grâce à la méthode selon l'invention, on a une mesure quasi-directe du coefficient de dilation thermique, puisque les calculs pour l'obtenir à partir des mesures du paramètre de maille sont simples et rapides et ne demandent pas de prendre en compte des conditions particulières relatives aux films.

La détermination des paramètres de maille par diffraction de rayons X est bien connue de l'homme du métier et ne sera pas décrite en détail. Grâce à la diffraction de rayons X, on obtient les intensités des réflexions, leurs positions et leurs largeurs de raie. A partir des positions des réflexions dans l'espace tridimensionnel, on détermine le ou les paramètres de maille et le réseau de Bravais du cristal ; les paramètres de maille du cristal dans le réseau direct sont calculés à partir de ceux du réseau réciproque mesurés par diffraction (transformée de Fourier du réseau direct). C'est à partir du réseau direct que l'on peut déterminer le coefficient de dilatation thermique.

Le coefficient de dilatation thermique est calculé en utilisant l'équation 1. On trace la variation du paramètre de maille d en fonction de la température. Le calcul de la dérivée de cette courbe donne le coefficient de dilatation thermique à chaque température. Si ce le coefficient de dilatation thermique est indépendant de la température, la fonction relation est linéaire, sinon on détermine le coefficient de dilatation thermique pour chaque température.

Lors du chauffage, le four subit une dilatation, ce qui peut provoquer un déplacement de l'échantillon et donc de la de la zone structurée visée par le faisceau incident, le long de la normale au plan de l'échantillon. Les pics de diffraction se trouvent décalés angulairement, or c'est l'emplacement précis des pics de diffraction qui permet de mesurer les paramètres de maille.

De manière avantageuse, on met en œuvre un détecteur d'angle du faisceau diffracté, i.e. un détecteur offrant une sélectivité angulaire, qui est capable de déterminer l'angle du faisceau diffracté directement à partir de sa direction. Ce type de capteur est également désigné détecteur 0D et est muni d'un jeu de fentes sélectif angulairement. La mesure de l'angle du faisceau diffracté se fait en scannant angulairement pas à pas le détecteur.

On s'affranchit alors du déplacement de l'échantillon le long de la normale au plan de l'échantillon.

En variante, on peut utiliser un cristal analyseur remplissant la même fonction que le jeu de fentes sélectives. Selon une autre variante, on peut étalonner préalablement le four en déplacement avec la température et faire une correction de la position du four a priori ou une correction d'angles de diffraction a posteriori.

Le procédé selon l'invention permet de déterminer plus simplement le coefficient de dilatation thermique d'une couche mince cristalline en comparaison des procédés de l'état de la technique.

Dans un autre exemple de réalisation, le procédé selon l'invention permet de déterminer la contrainte interne ou résiduelle du film mince.

Pour cela, on mesure pour chaque température et dans la même direction de l'espace, le paramètre de maille dans la zone structurée et le paramètre de maille dans la zone pleine plaque.

Dans cet exemple, l'échantillon comporte une zone pleine plaque 9 suffisamment éloignée de la zone structurée 6 pour qu'elle ne soit pas sensible à la relaxation des contraintes dans la zone structurée, ainsi la contrainte dans la zone pleine plaque est la contrainte du film sans zone structurée (figure 6). Les flèches I1, I2 et Df1, Df2 désignent les faisceaux respectivement incidents et diffractées sur la zone structurée et sur la zone pleine plaque.

La mesure dans la zone structurée donne le paramètre de maille non contraint et la mesure dans la zone pleine plaque donne le paramètre de maille contraint, on peut alors déterminer directement la déformation et donc la contrainte du film mince.

En effet, par exemple avec un faisceau incident selon la normale à l'échantillon (y = 0),

$$\varepsilon_{\gamma=0} = \frac{d_{\gamma=0} - d_0}{d_0} = 2c_2\sigma$$

avec $d_0$ le paramètre de maille (non contraint) mesurée sur la zone structurée , $d_{\gamma=0}$ le paramètre de maille contraint mesuré sur la zone pleine plaque pour $\gamma$ = 0 et c2

le module d'élasticité du matériau du film mince. En connaissant $c_2$ et en mesurant $d_{\gamma=0}$ et $d_0$, on peut en déduire $\sigma$.

De manière très avantageuse, la détection des rayons diffractés est faite avec un détecteur de position, désigné détecteur 1D, qui peut être un détecteur de type CMOS ou détecteur à fil. Ceci permet de supprimer le désalignement qui peut apparaître du fait du déplacement de l'échantillon par dilatation du four. En effet, à chaque température, en travaillant en position le même désalignement apparaît dans la mesure de $d_0$ et dans la mesure de $d_{\gamma=0}$.

En faisant la différence entre ces deux mesures, le désalignement est supprimé.

La détermination de la contrainte est sensiblement plus rapide qu'avec les méthodes de l'état de la technique, de l'ordre de 10 à 100 fois plus rapide.

En variante, les mesures de $d_{\gamma=0}$ et $d_0$ sont faites par un détecteur 0D, par exemple un scintillateur ou un détecteur proportionnel. Cependant le temps de mesure est plus long qu'avec un détecteur 1D.

La détermination du coefficient de dilatation thermique et la détermination de la contrainte peuvent avantageusement être simultanées, puisque dans les deux déterminations la mesure du paramètre de maille dans la zone structurée a lieu.

Grâce à l'invention, la méthode de détermination du coefficient de dilatation thermique du film mince et la méthode de détermination de la contrainte dans le film mince sont simplifiées.

## Revendications

1. Méthode de détermination du coefficient de dilatation thermique d'un film mince en matériau cristallin déposé sur un substrat, comportant :

   a) la structuration d'une partie au moins du film mince cristallin de sorte à former un réseau de plots dont la hauteur est au moins égale à l'épaisseur du film mince,
   b) la mesure du paramètre de maille du matériau du film mince par diffraction dans le réseau de plots à plusieurs températures données,
   c) détermination du coefficient de dilatation thermique à partir des paramètres de mailles mesurés aux différentes températures.

2. Méthode de détermination selon la revendication 1, dans laquelle lors de l'étape c), un détecteur d'angle est mis en œuvre pour détecter les faisceaux diffractés et dans laquelle le détecteur scanne angulairement pas à pas.

3. Méthode de détermination selon la revendication 1 ou 2, dans lequel lors de l'étape a) le réseau est réalisé par faisceau d'ions plasma focalisés ou par photolithographie et gravure.

4. Méthode de détermination selon l'une des revendications précédentes, dans laquelle les plots ont une profondeur supérieure à l'épaisseur du film mince de sorte que les plots comportent une partie du matériau du substrat.

5. Méthode de détermination selon l'une des revendications précédentes, dans laquelle lors de l'étape a) les plots formés comportent des flancs inclinés.

6. Méthode de détermination selon l'une des revendications précédentes, dans laquelle la surface du réseau de plots est au moins égale à l'empreinte du faisceau de diffraction sur le film mince.

7. Méthode de détermination selon l'une des revendications précédentes, dans laquelle lors de l'étape b), la ou les mesures du paramètre de maille est réalisé par diffraction de rayons X ou de neutrons.

## Patentansprüche

1. Verfahren zur Bestimmung des Wärmeausdehnungskoeffizienten einer Dünnschicht aus kristallinem Material, die auf einem Substrat abgeschieden wird, umfassend:

   a) Strukturieren eines Teils von mindestens der kristallinen Dünnschicht, so dass ein Netz von Kontaktstellen gebildet wird, deren Höhe mindestens gleich der Dicke der Dünnschicht ist,
   b) Messen der Gitterkonstante des Materials der Dünnschicht durch Beugung in dem Netz von Kontaktstellen bei mehreren gegebenen Temperaturen,
   c) Bestimmen des Wärmeausdehnungskoeffizienten aus den bei unterschiedlichen Temperaturen gemessenen Gitterkonstanten.

2. Bestimmungsverfahren nach Anspruch 1, wobei während des Schritts c) ein Winkeldetektor zum Erfassen der gebeugten Strahlen eingesetzt wird und wobei der Winkeldetektor schrittweise winklig scannt.

3. Bestimmungsverfahren nach Anspruch 1 oder 2, wobei während des Schritts a) das Netz durch fokussierte Plasmaionenstrahlen oder durch Photolithographie und Ätzen umgesetzt wird.

4. Bestimmungsverfahren nach einem der vorhergehenden Ansprüche, wobei die Kontaktstellen eine Tiefe aufweisen, die größer als die Dicke der Dünnschicht ist, so dass die Kontaktstellen einen Teil des Materials des Substrats umfassen.

**5.** Bestimmungsverfahren nach einem der vorhergehenden Ansprüche, wobei während des Schritts a) die gebildeten Kontaktstellen geneigte Flanken umfassen.

**6.** Bestimmungsverfahren nach einem der vorhergehenden Ansprüche, wobei die Oberfläche des Netzes von Kontaktstellen mindestens gleich dem Abdruck des Beugungsstrahls auf der Dünnschicht ist.

**7.** Bestimmungsverfahren nach einem der vorhergehenden Ansprüche, wobei während des Schritts b) die Messung oder die Messungen der Gitterkonstante durch Röntgenstrahlen- oder Neutronenbeugung umgesetzt wird bzw. werden.


**Claims**

**1.** A method for determining the coefficient of thermal expansion of a thin film made of crystalline material deposited on a substrate, including:

> a) structuring at least one portion of the thin crystalline film so as to form an array of pads whose height is at least equal to the thickness of the thin film,
> b) measuring the lattice parameter of the material of the thin film by diffraction in the array of pads at several given temperatures,
> c) determining the coefficient of thermal expansion from the lattice parameters measured at different temperatures.

**2.** The determination method according to claim 1, wherein during step c), an angle detector is implemented to detect the diffracted beams and wherein the detector scans angularly stepwise.

**3.** The determination method according to claim 1 or 2, wherein during step a) the array is produced by focused plasma ion beam or by photolithography and etching.

**4.** The determination method according to one of the preceding claims, wherein the pads have a depth greater than the thickness of the thin film such that the pads include a portion of the material of the substrate.

**5.** The determination method according to one of the preceding claims, wherein during step a) the formed pads include inclined flanks.

**6.** The determination method according to one of the preceding claims, wherein the surface of the array of pads is at least equal to the footprint of the diffraction beam on the thin film.

**7.** The determination method according to one of the preceding claims, wherein during step b), the measurement(s) of the lattice parameter is/are carried out by X-ray or neutron diffraction.

FIG.1

FIG.2B

FIG.2A

FIG.2C

FIG.3A

FIG.3B

FIG.4A

FIG.4B

FIG.5A

FIG.5B

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Y. KURU ; M. WOHLSCHLÖGEL ; U. WELZEL ; E. J. MITTEMEIJER.** *J. Appl. Cryst.,* 2008, vol. 41, 428-435
- **S.P. BAKER ; A. KRETSCHMANN ; E. ARZT.** *Acta Mater.,* 2001, vol. 49, 2145
- **JOZEF KECKES.** Simultaneous determination of experimental elastic and thermal strains in thin films. *JOURNAL OF APPLIED CRYSTALLOGRAPHY.,* 11 Mars 2005, vol. 38 (2), ISSN 0021-8898, 311-318

- Investigation of coefficient of thermal expansion of silver thin film on différent substrates using X-ray diffraction. **ZOO Y et al.** THIN SOLID FILMS. ELSEVIER, 14 Août 2006, vol. 513, 170-174
- **BAIMPAS et al.** Stress evaluation in thin films : Micro-focus synchrotron X-ray diffraction combined with focused ion beam patterning for do évaluation. *Thin Solid Films,* 2013, vol. 549, 245-250